# EUROPÄISCHE PATENTSCHRIFT

(11) **EP 2 470 112 B1**
(45) Veröffentlichungstag und Bekanntmachung des Hinweises auf die Patenterteilung: **02.10.2013**
(21) Anmeldenummer: 10767915.1
(22) Anmeldetag: 13.08.2010
(51) Int. Cl.: A61C 8/00

(54) **ZAHNIMPLANTATSYSTEM MIT EINEM PROTHETIKPFOSTEN**
DENTAL IMPLANT SYSTEM WITH A PROSTHETIC POST
SYTÈME D'IMPLANT DENTAIRE AVEC UN TENON PROTHÉTIQUE

(30) Priorität: 29.08.2009 DE 202009011750 U
(43) Veröffentlichungstag der Anmeldung: 04.07.2012
(73) Patentinhaber: Indi Implant Systems GmbH, 02826 Görlitz (DE)
(72) Erfinder: MENZEL, Michael, 02826 Görlitz (DE); RÖRUP, Henning, 21385 Amelinghausen (DE)
(74) Vertreter: Kaufmann, Sigfrid
(86) Internationale Anmeldenummer: PCT/DE2010/075076
(87) Internationale Veröffentlichungsnummer: WO 2011/023189

(56) Entgegenhaltungen:
- EP-A1- 1 319 375
- EP-A1- 1 967 157
- EP-A1- 1 992 304
- DE-A1-102007 026 325
- US-A- 4 722 688

## Beschreibung

Die Erfindung betrifft ein Zahnimplantatsystem mit einem Prothetikpfosten, das besonders vorteilhaft in Verbindung mit einem Zahnimplantatsystem gemäß DE 10 2007 018 453 B3, bei dem im Zahnimplantat das enossale Implantat und das Abutment integrativ zusammengefasst sind, eingesetzt werden kann. Durch die Verwendung des Prothetikpfostens wird bewirkt, dass die beim Kauen auftretenden Zug- und Druckkräfte gleichmäßiger in den relativ weichen Kiefer eingeleitet werden als mit den konventionellen, im Abutment integrierten Prothetikpfosten aus Titan oder Zirkonoxid.

Üblicherweise bestehen Zahnimplantatsysteme (künstlicher Zahnersatz) aus drei Komponenten: einer künstlichen Wurzel (enossales Implantat), einem Verbindungsstück, dem so genannten Abutment, und einer Prothetik wie z. B. einer Krone oder einer Brücke.

Die Befestigung der Suprakonstruktion am Abutment mit Hilfe eines starren prothetischen Aufbaustifts (Prothetikpfostens) führt jedoch zu ungünstigen Kräfteverteilungen und Hebelverhältnissen, wodurch eine erhöhte Bruchgefahr besteht. Bei verschraubten Prothetikpfosten treten außerdem noch nachweisbar zerstörerische Mikrobewegungen auf.

In den letzten Jahren wurde ein erheblicher Fortschritt in der Implantattechnik erreicht. So wurde mit DE 10 2007 018 453 B3 ein Implantatsystem geschaffen, das insbesondere ästhetisch ansprechend und am Zahnfleischsaum unsichtbar ist. Zudem ermöglicht es ein gutes Verwachsen des Zahnfleisches im gingivalen Bereich und gewährleistet eine mechanisch stabile und langlebige Verbindung des Zahnaufbaus mit dem Kieferknochen.

Dieses Zahnimplantatsystem setzt sich aus einem typischerweise wabenförmig oder gewindeförmig strukturierten unteren enossalen Bereich, einem sich nach oben hin aufweitenden oberen enossalen Bereich mit aufgerauter Oberfläche, einem transgingivalen Bereich mit glatter Wandfläche und einem transgingivalen Implantatkopf zusammen. Alle diese Bereiche schließen naht- und spaltlos aneinander an.

Auf die gesamte Fläche des Implantatkopfes ist eine Suprakonstruktion mit ihrer Unterseite, die der Form des Implantatkopfes angepasst ist, aufgeklebt oder aufzementiert. Diese Verbindung nimmt einen Großteil der zwischen Implantat und Suprakonstruktion wirkenden Kräfte auf. Zur Vermeidung einer seitlichen Verschiebung ist ein Prothetikpfosten ungefähr im Zentrum der Präparationsfläche in den transgingivalen Bereich des Implantats eingeschraubt und auf der anderen Seite mit der Suprakonstruktion verbunden. Die Basalfläche des Prothetikpfostens liegt auf dem flachen Teil des transgingivalen Implantatkopfes auf.

Das Implantat ist vorteilhafterweise aus einem Stück (Rohling) hergestellt. Als medizintechnisch bewährte Materialien für des Implantat sowie den Prothetikpfosten werden Titan und Zirkonoxid bevorzugt.

Titan, aber insbesondere Zirkonoxid weisen eine hohe Festigkeit und nur eine sehr geringe physikalische Elastizität auf. Die E-Moduln von Titan und Zirkonoxid betragen 105 bzw. 200 kN/mm². Besteht der Prothetikpfosten aus einem dieser Materialien, werden die Kräfte, die beim Kauen auf die Suprakonstruktion (Prothetik) wirken, über den Prothetikpfosten direkt in das Implantat und von diesem auf den Kieferknochen übertragen. Diese starre Struktur entspricht nicht der natürlichen Aufhängung des Zahnes im Kiefer, welche elastisch ist.

In EP 1 967 157 A wird ein an einem Abutment ausgeformter Prothetikpfosten für ein Zahnimplantat beschrieben, der aus einem biokompatiblen Material besteht, das einen E-Modul kleiner als 100 kN/mm² aufweist. Im Zahnimplantat befindet sich eine Bohrung mit glatter Oberfläche und der untere Bereich des Prothetikpfostens ist ebenfalls glatt ausgeführt und in seiner Geometrie so auf die Bohrung im Zahnimplantat abgestimmt, dass er zur Befestigung des Prothetikpfostens vollständig in das Zahnimplantat eingebracht und mit dem Zahnimplantat verklebt werden kann.

Aufgabe der Erfindung ist es, ein Zahnimplantatsystem mit einem Prothetikpfosten bereitzustellen, mit dem der Nachteil des Standes der Technik beseitigt wird, insbesondere soll ein kostengünstiger Prothetikpfosten geschaffen werden, durch dessen Einsatz in Zahnimplantatsystemen die natürliche, elastische Aufhängung des Zahnes im Knochen nachgebildet wird.

Diese Aufgabe wird durch die Merkmale des Patentanspruchs 1 gelöst, vorteilhafte Ausgestaltungen ergeben sich aus den abhängigen Ansprüchen.

Ausgegangen wird von einem Zahnimplantatsystem, das ein Zahnimplantat mit einer Bohrung und einen Prothetikpfosten aufweist, der zur mechanischen Befestigung der Prothetik an dem Zahnimplantat dient und der mechanisch mit dem Zahnimplantat verbunden wird. Der Prothetikpfosten besteht aus einem biokompatiblen Material mit einem E-Modul kleiner 100 kN/mm². Er weist einen stabförmigen unteren Bereich auf, an den sei ein oberer Bereich anschließt, der zur Befestigung der Prothetik dient. Die Härte des Prothetikpfostens ist geringer als die des Zahnimplantats.

Nach Maßgabe der Erfindung ist die Bohrung im Zahnimplantat derart mit einem Innengewinde versehen, dass durch Eindrehen des glatt ausgeführten unteren Bereichs des Prothetikpfostens in die Bohrung des Zahnimplantats mittels des Innengewindes der Bohrung ein Gewinde in den unteren Bereich des Prothetikpfostens geschnitten wird.

Bei Faserwerkstoffen nehmen die Werte der E-Moduln abhängig von der Richtung sehr verschiedene Werte an. So beträgt z.B. bei kohlefaserverstärktem Kunststoff der E-Modul für parallel zu den Fasern und in Zugrichtung einwirkende Kräfte 140 bis 150 kN/mm², wohingegen der E-Modul für seitlich zu den Fasern wirkende Kräfte lediglich 13 kN/mm² beträgt. Auch für Kräfte die parallel zur Faserrichtung, jedoch in Druckrichtung wirken, werden E-Moduln kleiner 100 kN/mm² gemessen.

Da von den über den Prothetikpfosten übertragenen Kräften nur die Druckkräfte und die seitlich wirkenden Kräfte kritisch sind, ist bei Auswahl von faserverstärkten Verbundwerkstoffen für den Prothetikpfosten darauf zu achten, dass die E-Moduln für seitlich zu den Fasern wirkende und für in Druckrichtung längs der Fasern wirkende Kräfte kleiner 100 kN/mm² sind. Höhere E-Moduln in Zugrichtung der Fasern sind unkritisch.

Besonders geeignete Materialien für den Prothetikpfosten sind glasfaserverstärkte (GFK), kohlenstofffaserverstärkte (CFK) und aramidfaserverstärkte Kunststoffe sowie Polyetheretherketon (PEEK).

Durch den Einsatz von Materialien mit höherer Elastizität (kleineren E-Moduln) werden erstens statisch wirkende Kräfte gleichmäßiger in das Zahnimplantat und letztendlich auch in den Kieferknochen eingeleitet, da durch die Elastizität des Prothetikpfostens, im Gegensatz zu Prothetikpfosten aus Materialien mit sehr geringen Elastizität an (Titan, Zirkonoxid), die Einleitung großer Kräfte an den Kanten vermieden wird; vielmehr verteilt sich die Krafteinwirkung auf die unterhalb der Kante liegenden Bereiche. Zweitens werden kurze Impulse mit sehr hohen Kräften (dynamisch wirkende Kräfte) gedämpft, indem die Kraftspitzen durch ein Verteilen über eine längere Zeit gemindert werden.

Hierdurch wird, im Gegensatz zu den üblicherweise verwendeten Implantaten mit starrer Kraftkopplung an den Kieferknochen, die natürliche, elastische Aufhängung des Zahnes im Knochen (Sharpey-Fasern) nachbildet. Das Implantat kann infolgedessen schneller in den Knochen einwachsen (Osseo-Integration). Durch die gleichmäßigere Krafteinleitung wird zudem der bei herkömmlichen Implantaten während der Tragzeit zwangsläufig auftretende Knochenabbau nachhaltig verringert, sodass generell höhere Tragzeiten erreichbar sind.

Es ist vorgesehen, vorkonfektionierte Prothetikpfosten mit einem stabförmigen unteren Bereich (Durchmesser vorzugsweise ca. 2,0 mm), der beim Befestigen der Prothetik vollständig in die Bohrung im Zahnimplantat eingebracht wird, und einem sich an den unteren Bereich anschließenden oberen Bereich mit einem größeren Durchmesser (ca. 4 bis 6 mm, teilweise parallelwandig bis hin zur konischen Abschrägung) basal (wo der Stift auf dem Kopf aufliegt) einzusetzen. Die sonstige Geometrie des Prothetikpfostens ist so gewählt, dass der Prothetikpfosten subtraktiv und/oder additiv an beliebige Prothetiken angepasst werden kann.

Das erfindungsgemäße Zahnimplantatsystem mit Prothetikpfosten kann besonders vorteilhaft in Verbindung mit einem Zahnimplantatsystem eingesetzt werden, bei dem das Zahnimplantat sowohl das enossale Zahnimplantat (Zahnimplantat ohne Abutment) als auch das Abutment funktional umfasst (s. DE 10 2007 018 453 B3), was jedoch nicht ausschließt, dass der erfindungsgemäße Prothetikpfosten in Zukunft auch mit anderen Zahnimplantatsystemen verwendet werden kann.

Mit dem erfindungsgemäßen Zahnimplantatsystem bzw. dessen Prothetikpfosten werden des Weiteren zwei wirtschaftliche Vorteile erreicht: erstens können die Prothetikpfosten, da sie vorkonfektionierbar sind, sehr kostengünstig hergestellt werden. Zweitens findet, im Gegensatz zur sonst üblichen Praxis, bei der mit einem integrierten Prothetikpfosten ausgestattete Abutments verwendet werden, beim Einsatz des erfindungsgemäßen Prothetikpfostens aufgrund der erforderlichen Anpassung für die Prothetik, wieder ein größerer Anteil der Wertschöpfung in den Zahnarztpraxen statt. Da meistens die Zahnärzte entscheiden, welches Zahnimplantatsystem zum Einsatz kommt, ist dies vorteilhaft für die Marktakzeptanz des erfindungsgemäßen Prothetikpfostens, bzw. von Zahnimplantatsystemen, die diesen verwenden.

Im Zahnimplantatsystem werden damit die mechanischen Belastungen mittels einer großflächigen kraftschlüssigen Verbindung, gebildet durch die Verschraubung zwischen dem Implantatkopf und der Unterseite der Prothetik, aufgenommen. Der verwendete Prothetikpfosten hat eine unterstützende Funktion, verhindert ein seitliches Verschieben während des Einbringens der Prothetik und fungiert durch die basale Auflage auf dem flachen Teil des transgingivalen Implantatkopfes bei seitlich einfallenden Kräften als kraftaufnehmendes Element.

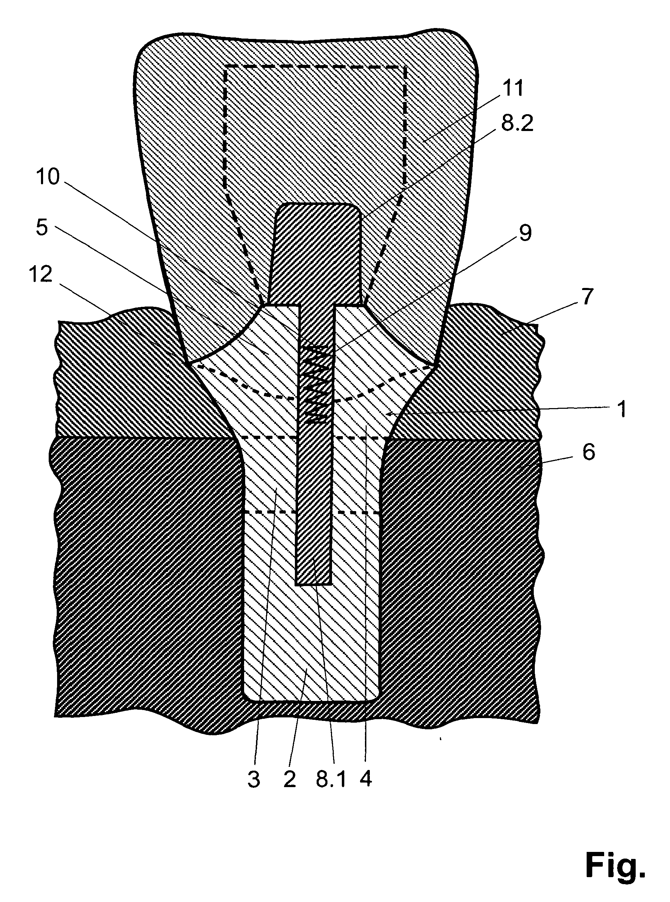

Die Erfindung wird nachfolgend anhand eines Ausführungsbeispiels näher erläutert; hierzu zeigt die Figur in schematischer Darstellung ein Zahnimplantat, einen Prothetikpfosten und eine Prothetik (Schnitt; Ansicht von vestibulär).

Es ist ein einteiliges Zahnimplantat 1 aus Titan, bei dem das enossale Implantatbett und das Abutment integrativ zusammengefasst sind, mit einer daran befestigten Prothetik 11 als Querschnitt mit palatinaler Blickrichtung dargestellt. Das Implantat besteht aus einem unteren enossalen Bereich 2, einem oberen enossalen Bereich 3, einem transgingivalen Bereich 4 und einem transgingivalen Implantatkopf 5.

Der tief im Kieferknochen sitzende, untere enossale Bereich 2 weist ein Wabenmuster auf, wobei sich jeweils in den Ecken der Waben Spitzen befinden. Diese bewährte Struktur ermöglicht ein optimales Einwachsen des Implantats.

An den unteren enossalen Bereich 1 schließt sich der obere enossale Bereich 3 an, der so ausgeformt ist, dass sein oberer Rand bis zur Oberkante des kammförmigen Kieferknochens 6 reicht.

Dem Bereich 3 folgt der glatt polierte transgingivale Bereich 4. Dieser Bereich ist derart geformt, dass er umlaufend bis ca. 1 mm unterhalb des Zahnfleischsaums reicht, wobei dieser ca. 1 mm in etwa der Tiefe entspricht, bis zu welcher auch bei einem gesunden Zahn das Zahnfleisch nicht mit dem Zahn verwachsen ist, sondern lediglich lose anliegt.

An das Ende des transgingivalen Bereichs 4, das gleichzeitig die Präparationsgrenze 12 bildet, schließt sich der transgingivale Implantatkopf 5 an. Im flachen Teilbereich des Implantatkopfes 1 befindet sich eine Bohrung 9, die im oberen Bereich standardmäßig mit einem Innengewinde 10 versehen ist. Vor dem Anfertigen der Prothetik wird vom Zahnarzt der obere Bereich 8.2 des vorkonvektionierten Prothetikpfostens von seiner ursprünglichen Geometrie (gestrichelte Linie) durch subtraktive (z. B. Schleifen) sowie additive (z. B. Kunststoffantrag) Techniken individuell geformt (durchgezogene Linie) Der untere Bereich 8.1 des Prothetikpfostens wird in die Bohrung 10 eingeschraubt, der obere Bereich des Prothetikpfostens wird abgeformt und dient als Basis zur Herstellung der Prothetik die anschließend mit dem oberen Bereich des Prothetikpfostens und dem Implantatkopf verklebt wird. Durch die Verwendung von Panavia 2.0 und die Einhaltung der empfohlenen Klebespaltbreite von ca. 20 µm wird eine dauerhafte, elastische Verbindung zwischen dem Prothetikpfosten und dem Implantatkopf 5 sichergestellt.

### Liste der verwendeten Bezugszeichen:

1. Zahnimplantat
2. unterer enossaler Bereich
3. oberer enossaler Bereich
4. transgingivaler Bereich
5. transgingivaler Implantatkopf
6. Kieferknochen
7. Zahnfleisch
8.1 unterer Bereich des Prothetikpfostens
8.2 oberer Bereich des Prothetikpfostens 9. Bohrung
10. Innengewinde
11. Prothetik
12. Präparationsgrenze/Kante

## Patentansprüche

1. Zahnimplantatsystem mit einem Prothetikpfosten (8), der der mechanischen Befestigung der Prothetik (11) an einem Zahnimplantat (1) dient und der mechanisch mit dem Zahnimplantat (1) verbindbar ist, wobei der Prothetikpfosten (8) aus einem biokompatiblen Material mit einem E-Modul kleiner 100 kN/mm² besteht, einen stabförmigen unteren Bereich (8.1), der glatt ausgeführt ist, und einen sich an den unteren Bereich (8.1) anschließenden oberen Bereich (8.2) aufweist, der zur Befestigung der Prothetik (11) dient, und die Härte des Prothetikpfostens (8) geringer ist als die des Zahnimplantats (1), und mit einem Zahnimplantat (1) mit einer Bohrung (9), **dadurch gekennzeichnet, dass** die Bohrung (9) mit einem Innengewinde (10) versehen ist, so dass durch Eindrehen des glatt ausgeführten unteren Bereichs (8.1) des Prothetikpfostens (8) in diese Bohrung (9) mittels des Innengewindes (10) ein Gewinde in den unteren Bereich (8.1) des Prothetikpfostens (8) geschnitten wird.

2. Zahnimplantatssystem nach Anspruch 1, **dadurch gekennzeichnet, dass** der untere Bereich (8.1) des Prothetikpfostens (8) für ein vollständiges Einbringen in das Zahnimplantat (1) vorgesehen ist.

3. Zahnimplantatsystem nach Anspruch 1 oder 2, **dadurch gekennzeichnet, dass** der untere Bereich (8.1) einen Durchmesser von ca. 2 mm und der obere Bereich (8.2) einen größeren Durchmesser von ca. 4 mm bis 6 mm aufweist, wobei die Geometrie des oberen Bereichs (8.2) so gewählt ist, dass er an beliebige Prothetiken (11) subtraktiv und/oder additiv anpassbar ist.

4. Zahnimplantatsystem nach einem der Ansprüche 1 bis 3, **dadurch gekennzeichnet, dass** er aus glasfaserverstärktem Kunststoff besteht.

5. Zahnimplantatsystem nach einem der Ansprüche 1 bis 3, **dadurch gekennzeichnet, dass** er aus kohlenstofffaserverstärktem Kunststoff besteht.

6. Zahnimplantatsystem nach einem der Ansprüche 1 bis 3, **dadurch gekennzeichnet, dass** er aus aramidfaserverstärktem Kunststoff besteht.

7. Zahnimplantatsystem nach einem der Ansprüche 1 bis 3, **dadurch gekennzeichnet, dass** er aus Polyetheretherketon besteht.

8. Zahnimplantatsystem nach einem der Ansprüche 1 bis 7, **dadurch gekennzeichnet, dass** das Zahnimplantat (1) als ein zusammenhängendes Stück ausgeführt ist, das sowohl das enossale Zahnimplantat als auch das Abutment funktional umfasst.

## Claims

1. A dental implant system, comprising an abutment (8), which is used to mechanically secure the prosthetic (11) to a dental implant (1) and can be mechanically connected to the dental implant (11), the abutment (8) being made of a biocompatible material having a modulus of elasticity of less than 100 kN/mm², a rod-shaped lower region (8.1), which is smooth, an upper region (8.2), which adjoins the lower region (8.1) and is used to secure the prosthetic (11), the hardness of the abutment (8) being lower than that of the dental implant (1), and a dental implant (1) having a borehole (9), **characterized in that** the borehole (9) is provided with an internal thread (10), so that a thread is cut into the lower region (8.1) of the abutment (8) when screwing the smooth lower region (8.1) of the abutment (8) into this borehole (9) by way of the internal thread (10).

2. The dental implant system according to claim 1, **characterized in that** the lower region (8.1) of the abutment (8) is intended to be fully introduced into the dental implant (1).

3. The dental implant system according to claim 1 or 2, **characterized in that** the lower region (8.1) has a diameter of approximately 2 mm and the upper region (8.2) has a larger diameter of approximately 4 mm to 6 mm, the geometry of the upper region (8.2) being selected so that this region can be adapted to any arbitrary prosthetics (11) by way of subtraction and/or addition.

4. A dental implant system according to any one of claims 1 to 3, **characterized in that** the lower region is made of a glass fiber-reinforced plastic material.

5. A dental implant system according to any one of claims 1 to 3, **characterized in that** the lower region is made of a carbon fiber-reinforced plastic material.

6. A dental implant system according to any one of claims 1 to 3, **characterized in that** the lower region is made of an aramid fiber-reinforced plastic material.

7. A dental implant system according to any one of claims 1 to 3, **characterized in that** the lower region is made of polyetheretherketone.

8. A dental implant system according to any one of claims 1 to 7, **characterized in that** the dental implant (1) is designed as one cohesive piece, which functionally comprises both the endosseous dental implant and the abutment.

## Revendications

1. Système d'implant dentaire avec un tenon prothétique (8) servant à fixer mécaniquement la prothétique (11) à l'implant dentaire (1) et pouvant être relié mécaniquement à l'implant dentaire (1), dans lequel le tenon prothétique (8) est constitué d'un matériau biocompatible avec un module E inférieur à 100 kN/mm², et comporte une région inférieure en forme de baguette (8.1) conçue lisse et une région supérieure (8.2) adjacente à la région inférieure (8.1), laquelle sert à fixer la prothétique (11), et la dureté du tenon prothétique (8) est inférieure à celle de l'implant dentaire (1), et avec un implant dentaire (1) avec un perçage (9), **caractérisé en ce que** le perçage (9) est pourvu d'un filet intérieur (10), de manière à couper un filet dans la région inférieure (8.1) du tenon prothétique (8) au moyen du filet intérieur (10), par vissage de la région inférieure (8.1) conçue lisse du tenon prothétique (8) dans ce perçage (9).

2. Système d'implant dentaire selon la revendication 1, **caractérisé en ce que** la région inférieure (8.1) du tenon prothétique (8) est destinée à être insérée entièrement dans l'implant dentaire (1).

3. Système d'implant dentaire selon la revendication 1 ou 2, **caractérisé en ce que** la région inférieure (8.1) présente un diamètre d'environ 2 mm, tandis que la région supérieure (8.2) présente un diamètre plus grand d'environ 4 mm à 6 mm, dans lequel la géométrie de la région supérieure (8.2) est choisie de manière à ce qu'elle puisse être adaptée à n'importe quelle prothétique (11) de façon soustractive et/ou additive.

4. Système d'implant dentaire selon l'une des revendications 1 à 3, **caractérisé en ce qu'**il est constitué de plastique renforcé de fibres de verre.

5. Système d'implant dentaire selon l'une des revendications 1 à 3, **caractérisé en ce qu'**il est constitué de plastique renforcé de fibres de carbone.

6. Système d'implant dentaire selon l'une des revendications 1 à 3, **caractérisé en ce qu'**il est constitué de plastique renforcé de fibres d'aramide.

7. Système d'implant dentaire selon l'une des revendications 1 à 3, **caractérisé en ce qu'**il est constitué de polyéther-éther-cétone.

8. Système d'implant dentaire selon l'une des revendications 1 à 7, **caractérisé en ce que** l'implant dentaire (1) est conçu comme une seule pièce comprenant fonctionnellement à la fois l'implant dentaire intra-osseux et le pilier.
